# FASCICULE DE BREVET EUROPEEN

(11) **EP 3 269 581 B1**
(45) Date de publication et mention de la délivrance du brevet: **05.01.2022**
(21) Numéro de dépôt: 17174349.5
(22) Date de dépôt: 02.06.2017
(51) Int. Cl.: B60L 58/10, B60L 1/02, B60L 1/00, B60L 3/00, B60L 9/04, B61C 3/02, B60L 50/53, B60L 58/20, B61C 17/06, B61D 49/00

(54) **SYSTEME D'ALIMENTATION ELECTRIQUE POUR UN VEHICULE FERROVIAIRE ET VEHICULE FERROVIAIRE COMPRENANT UN TEL SYSTEME**
LEISTUNGSVERSORGUNGSSYSTEM FÜR SCHIENENFAHRZEUG UND SCHIENENFAHRZEUG UMFASSEND DAS LEISTUNGSVERSORGUNGSSYSTEM
ELECTRIC POWER SUPPLY SYSTEM FOR A RAIL VEHICLE, AND RAIL VEHICLECOMPRISING SAID SYSTEM

(30) Priorité: 12.07.2016 FR 1656689
(43) Date de publication de la demande: 17.01.2018
(73) Titulaire: SNCF Voyageurs, 93200 Saint-Denis (FR)
(72) Inventeur: GOERES, David, 72000 Le Mans (FR); LAVIGNE, Philippe, 37270 Veretz (FR); CROIZE, Sébastien, 72650 La Bazoge (FR)
(74) Mandataire: IPAZ

(56) Documents cités:
- EP-A1- 2 340 957
- EP-A1- 2 738 034
- US-A1- 2014 097 670
- US-A1- 2015 061 377

## Description

L'invention concerne un système d'alimentation électrique pour un véhicule ferroviaire et un véhicule ferroviaire comprenant un tel système.

Le domaine de l'invention est le domaine des véhicules ferroviaires, tels que les trains, les train-tram ou les tramways, et plus précisément le domaine des systèmes d'alimentation électrique de tels véhicules ferroviaires, en particulier en l'absence de tension caténaire.

### ETAT DE LA TECHNIQUE

On connait les véhicules ferroviaires équipés de système d'alimentation comprenant des batteries pour alimenter, en l'absence de tension caténaire, des circuits fonctionnant à une tension inférieure à 110V. Les batteries utilisées dans l'état de l'art assurent un fonctionnement minimum de certains appareils du véhicule, tels que les dispositifs de freinage, l'éclairage de secours, le secours radio, etc. Cependant, la distribution de tensions inférieures à 110V utilise de grosses sections de câbles, ce qui est coûteux et encombrant à mettre en place.

De plus, dans cette configuration, des équipements auxiliaires tels que les équipements de climatisation, de chauffage, de production d'air, etc., ne sont pas alimentés car ces équipements fonctionnent à des tensions supérieures à 110V. Pour assurer leur fonctionnement, il est possible d'adapter ces équipements pour fonctionner à une tension inférieure ou égale à 110V. Une autre solution consisterait à utiliser des élévateurs de tension de 110V à la tension de fonctionnement des équipements auxiliaires. Cependant, ces deux solutions restent coûteuses et encombrantes à réaliser.

US2015/061377A1 et EP2340957A1 divulguent un système d'alimentation électrique pour un véhicule ferroviaire alimenté par une caténaire, comprenant un premier circuit électrique fonctionnant à une première tension; et un second circuit électrique fonctionnant à une seconde tension supérieure à la première tension; un moyen de stockage d'électricité, dit intermédiaire, à une tension intermédiaire; ladite tension intermédiaire est inférieure à une tension délivrée par la caténaire , le premier circuit, le second circuit et le moyen de stockage d'électricité étant agencés pour être alimentés par ladite caténaire lorsque ledit véhicule ferroviaire est alimenté par ladite caténaire, et en l'absence de tension dans ladite caténaire, le moyen de stockage étant prévu pour alimenter le second circuit.

Un but de la présente invention est de remédier à ces inconvénients.

Un autre but de la présente invention est de proposer un système d'alimentation assurant une continuité du fonctionnement du véhicule ferroviaire en l'absence de tension caténaire moins coûteux à mettre en œuvre.

Un autre but de la présente invention est de proposer un système d'alimentation assurant une continuité du fonctionnement du véhicule ferroviaire en l'absence de tension caténaire moins encombrant à mettre en œuvre.

### EXPOSE DE L'INVENTION

Au moins un des objectifs précités est atteint par un système d'alimentation électrique pour un véhicule ferroviaire alimenté par une caténaire suivant la revendication 1. Le véhicule peut comprendre :
- au moins un premier circuit électrique fonctionnant à une première tension ; et
- au moins un second circuit électrique fonctionnant à une seconde tension supérieure à la première tension.

Le véhicule peut comprendre au moins un moyen de stockage d'électricité, dit intermédiaire, à une tension intermédiaire supérieure ou égale à la seconde tension, prévu pour :
- être alimenté par ladite caténaire, et
- alimenter au moins un second circuit en l'absence de tension dans ladite caténaire.

Avec le système selon l'invention, le second circuit est alimenté, en l'absence de tension caténaire, par le moyen de stockage intermédiaire, assurant ainsi le fonctionnement du véhicule ferroviaire de façon continue.

Par ailleurs, la tension intermédiaire du moyen de stockage intermédiaire est supérieure ou égale à la première et à la seconde tension, ce qui évite l'utilisation de convertisseurs électriques, tels que des redresseurs ou élévateurs, qui sont des appareils coûteux et volumineux pour alimenter le premier circuit et le second circuit.

De plus, le système selon l'invention ne nécessite pas l'adaptation des équipements du véhicule ferroviaire connectés au premier et au deuxième circuit électrique.

Dans un mode de réalisation particulier, la tension intermédiaire est supérieure ou égale à la plus grande tension utilisée dans le véhicule ferroviaire.

Avantageusement, la première tension peut être inférieure ou égale à 220V, en particulier égale à 110V.

Dans une version de réalisation du système selon l'invention, au moins un moyen de stockage intermédiaire peut alimenter au moins un premier circuit.

Ainsi, l'énergie prévue pour alimenter au moins un premier circuit est stockée à une tension supérieure à 220V. La section des câbles utilisés est donc plus réduite, réduisant le coût de la réalisation du système selon l'invention.

Dans un mode de réalisation particulier, le système selon l'invention peut comprendre au moins un convertisseur de tension alimenté par au moins un moyen de stockage intermédiaire et alimentant au moins un premier circuit.

Un tel convertisseur reçoit en entrée un signal électrique à la tension intermédiaire et délivre en sortie un signal électrique à la première tension.

Avantageusement, le système selon l'invention peut comprendre au moins un moyen de stockage, dit premier moyen de stockage, alimenté par au moins un moyen de stockage intermédiaire et alimentant au moins un premier circuit, et agencé pour stocker de l'énergie électrique à la première tension.

Le système selon l'invention peut comprendre au moins un chargeur électrique alimentant au moins un premier moyen de stockage, à partir du moyen de stockage intermédiaire et/ou de la caténaire, et agencé en amont d'au moins un premier moyen de stockage.

Le chargeur électrique réalise alors une conversion de la tension du signal électrique reçu du moyen de stockage intermédiaire, respectivement de la caténaire, pour délivrer un signal électrique à la première tension.

Dans un mode de réalisation, le système selon l'invention peut comprendre un premier moyen de stockage individuel pour au moins, en particulier chaque, bogie du véhicule.

Par ailleurs, la seconde tension peut être comprise entre 300V et 800V, en particulier égale à 400V.

Dans un mode de réalisation particulier du système selon l'invention, la tension intermédiaire peut être égale à la seconde tension.

Alternativement, la tension intermédiaire peut être supérieure à la seconde tension, en particulier égale à 700V.

Dans un mode de réalisation, le système selon l'invention peut comprendre au moins un convertisseur de tension alimenté par au moins un moyen de stockage intermédiaire et alimentant au moins un second circuit.

Un tel convertisseur reçoit en entrée un signal électrique à la tension intermédiaire et délivre en sortie un signal électrique à la seconde tension.

De plus, un tel convertisseur peut être un convertisseur existant dans le véhicule ferroviaire.

Dans une version de réalisation, le système selon l'invention peut comprendre au moins un chargeur électrique, alimentant au moins un moyen de stockage intermédiaire, à partir de la caténaire, et agencé en amont d'au moins un moyen de stockage intermédiaire.

Le chargeur électrique réalise alors une conversion de la tension du signal électrique reçu de la caténaire, pour délivrer un signal électrique à la tension intermédiaire.

Dans un mode de réalisation préféré, le système selon l'invention peut comprendre deux moyens de stockage intermédiaires.

De plus, au moins un moyen de stockage intermédiaire peut comprendre au moins une batterie lithium-ion.

Dans un mode de réalisation particulier du système selon l'invention, chaque premier circuit peut être alimenté par chaque moyen de stockage intermédiaire. Dans ce cas, la défaillance d'un moyen de stockage intermédiaire n'affecte pas le bon fonctionnement du système selon l'invention et tous les premiers circuits peuvent être alimentés.

Alternativement, chaque premier circuit peut être alimenté par un seul et unique moyen de stockage intermédiaire.

Dans ce cas, le nombre de câbles nécessaires est plus réduit par rapport au mode de réalisation précédent.

Dans une version avantageuse de réalisation du système selon l'invention, au moins un moyen de stockage intermédiaire peut alimenter, et/ou être alimenté par, au moins un moteur électrique de traction du véhicule ferroviaire.

Ainsi, la traction du véhicule ferroviaire en l'absence de tension caténaire peut être possible, par exemple pour permettre de maîtriser le point d'arrêt du véhicule ou de le dégager d'une zone à risque. De plus, en présence de tension caténaire, le moteur de traction peut contribuer à stocker de l'énergie dans le moyen de stockage intermédiaire. Dans ce dernier cas, le moteur de traction se comporte comme un générateur alimentant le moyen de stockage intermédiaire.

Avantageusement, au moins un second circuit peut être, ou peut comprendre :
- un circuit de climatisation,
- un circuit de chauffage,
- un circuit de production de froid,
- un circuit de production d'air, et/ou
- un circuit de ventilation.

Avantageusement, au moins un premier circuit peut être, ou peut comprendre :
- un dispositif de freinage,
- un dispositif d'éclairage de secours, et/ou
- un dispositif radio d'urgence.

Suivant un autre aspect de l'invention, il est proposé un véhicule ferroviaire comprenant un système d'alimentation selon l'invention.

Un tel véhicule peut être un train, un train-tram ou un tramway.

### DESCRIPTION DES FIGURES ET MODES DE REALISATION

D'autres avantages et caractéristiques apparaîtront à l'examen de la description détaillée d'exemples nullement limitatifs, et des dessins annexés sur lesquels :
- les FIGURES 1 et 2 sont des représentations schématiques d'un premier exemple du système selon l'invention ;
- la FIGURE 3 est une représentation schématique d'un deuxième exemple du système selon l'invention ; et
- la FIGURE 4 est une représentation schématique d'un troisième exemple du système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

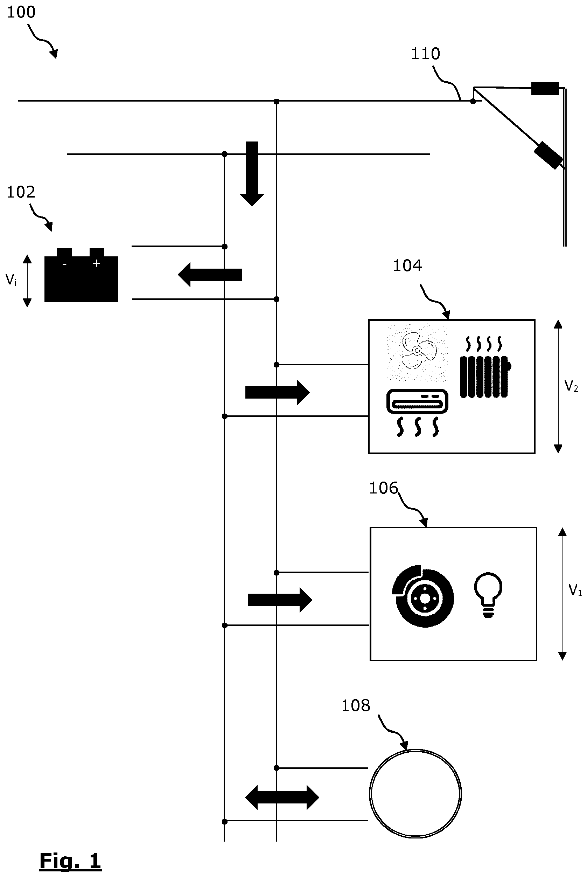

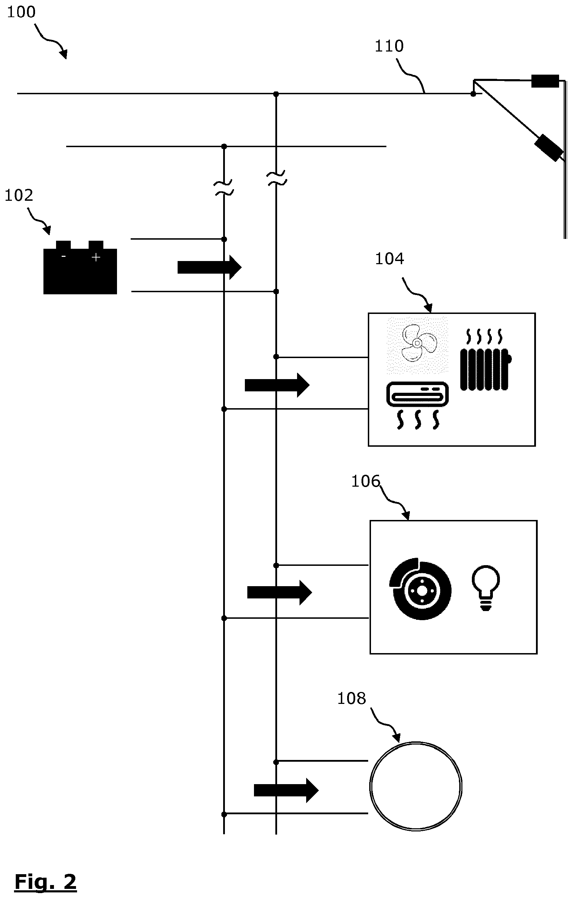

Les FIGURES 1 et 2 sont des représentations schématiques d'un premier exemple du système selon l'invention. Sur la FIGURE 1, le système est représenté en présence de tension, alors que sur la FIGURE 2 le système est représenté en l'absence de tension.

Le système 100 comprend un moyen de stockage intermédiaire 102 stockant l'électricité à une tension intermédiaire Vᵢ égale à 700V, un second circuit 104 fonctionnant à une seconde tension V₂ égale à 400V, un premier circuit 106 fonctionnant une première tension V₁ égale à 110V, et un moteur de traction 108. Le système 100 est un système d'alimentation d'un véhicule ferroviaire (non représenté) prévu pour être alimenté par une caténaire 110.

Dans la configuration représentée sur la FIGURE 1, la caténaire 110 alimente le second circuit 104, le premier circuit 106 et le moteur de traction 108. En même temps, la caténaire 110 alimente également le moyen de stockage intermédiaire 102 de sorte que ce dernier se charge.

Eventuellement, le moyen de stockage intermédiaire 102 peut également être alimenté par le moteur de traction 108, qui contribue ainsi à la charge du moyen de stockage intermédiaire 102.

Sur la FIGURE 2, le système 100 n'est pas relié à la caténaire 110 ou il n'existe pas de tension sur la caténaire 110. En l'absence de tension, le moyen de stockage intermédiaire 102 alimente le second circuit 104, le premier circuit 106 et, le cas échéant, le moteur de traction 108.

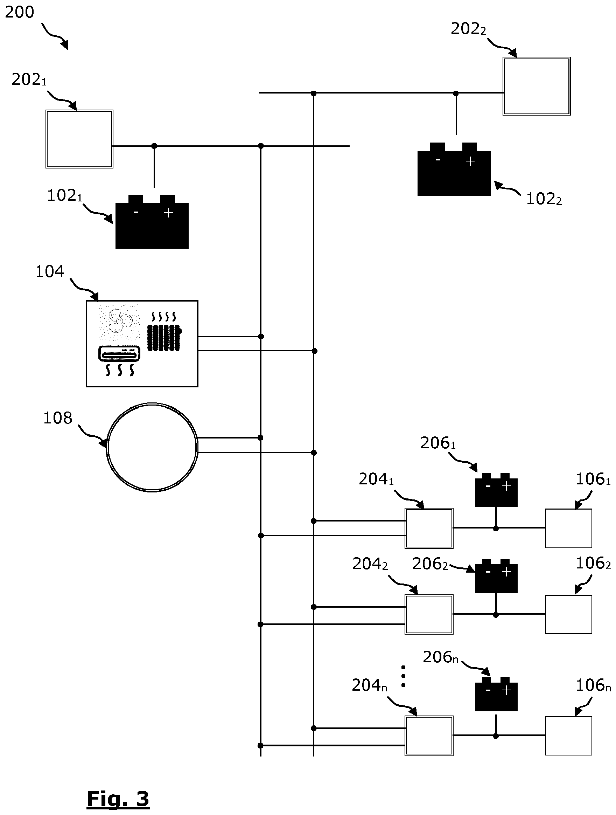

La FIGURE 3 est une représentation schématique d'un deuxième exemple du système selon l'invention.

Le système 200 comprend deux chargeurs intermédiaires 202₁ et 202₂ alimentés par une caténaire, non représentée sur la FIGURE 3, et alimentant, respectivement, deux moyens de stockage intermédiaires 102₁ et 102₂. Le moyen de stockage intermédiaire 102 stocke l'électricité à une tension égale à 700V. Le chargeur intermédiaire 202 réalise une conversion de la tension du signal électrique reçu de la caténaire, pour délivrer un signal électrique à une tension égale à 700V.

Le système 200 comprend aussi le second circuit 104 et le moteur de traction 108, des FIGURES 1 et 2. De plus, le système 200 comprend plusieurs premiers circuits 106₁-106ₙ disposés en aval de premiers chargeurs 204₁-204ₙ. Le système comprend aussi plusieurs premiers moyens de stockage 206₁-206ₙ, stockant l'électricité à une tension égale à 110V et agencés, respectivement, en aval des premiers chargeurs 204₁-204ₙ. Chaque premier chargeur 204 réalise une conversion de la tension du signal électrique reçu du chargeur intermédiaire 202 et/ou du moyen de stockage intermédiaire 102, pour délivrer un signal électrique à une tension égale à 110V.

En présence de tension, chacun des chargeurs intermédiaires 202 alimente le second circuit 104 et le moteur de traction 108. Chacun des chargeurs intermédiaires 202 alimente aussi chacun des premiers chargeurs 204. De plus, un premier chargeur 204 alimente un premier moyen de stockage 206 et un premier circuit 106.

En l'absence de tension, chacun des moyens de stockage intermédiaires 102 alimente le second circuit 104 et le moteur de traction 108. Si le niveau d'énergie est suffisant, un premier moyen de stockage 206 alimente un premier circuit 106. Alternativement, un premier circuit 106 est alimenté par les deux moyens de stockage intermédiaires 102.

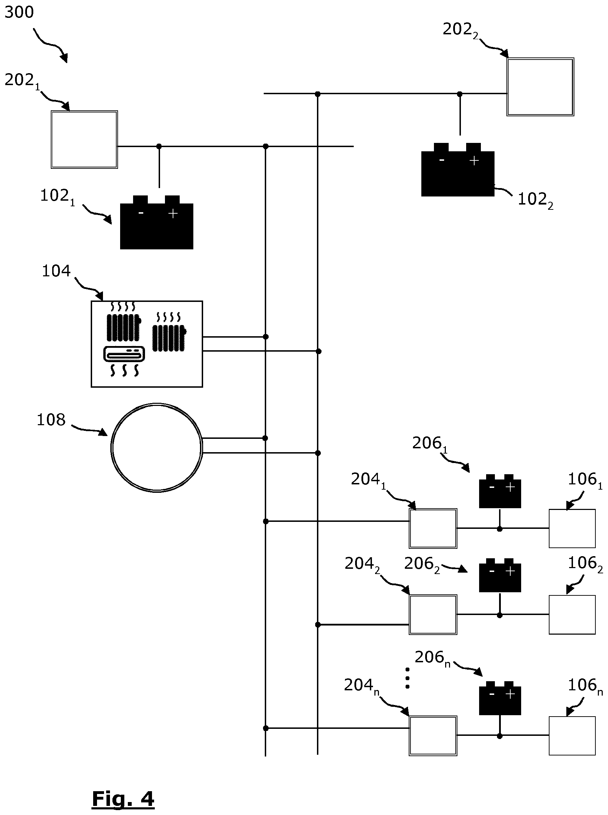

La FIGURE 4 est une représentation schématique d'un troisième exemple du système selon l'invention.

Le système 300 comprend les mêmes éléments que le système 200. A la différence du système 200 de la FIGURE 3, dans le système 300 de la FIGURE 4, le chargeur intermédiaire 202₁ alimente une partie des premiers chargeurs 204₁, 204₃,..., 204ₙ tandis que le chargeur intermédiaire 202₂ alimente l'autre partie des premiers chargeurs 204₂, 204₄,..., 204ₙ₋₁. Sur la FIGURE 4, on observe que le premier chargeur 204₁ est alimenté uniquement par le chargeur intermédiaire 202₁, et le premier chargeur 204₂ est alimenté uniquement par le chargeur intermédiaire 202₂.

En l'absence de tension, si le niveau d'énergie est suffisant un premier moyen de stockage 206 alimente un premier circuit 106. Alternativement, une partie des premiers circuits 106₁, 106₃,..., 106ₙ est alimentée par le moyen de stockage intermédiaire 102₁, et l'autre partie des premiers circuits 106₂, 106₄,..., 106ₙ₋₁ est alimentée par le moyen de stockage intermédiaire 102₂.

Bien sûr, l'invention n'est pas limitée aux exemples qui viennent d'être décrits et de nombreux aménagements peuvent être apportés à ces exemples sans sortir du cadre de l'invention.

## Revendications

1. Système d'alimentation électrique (100,200,300) pour un véhicule ferroviaire alimenté par une caténaire (110), ledit système (100,200,300) comprenant :
- au moins un premier circuit (106) électrique fonctionnant à une première tension ; et
- au moins un second circuit (104) électrique fonctionnant à une seconde tension supérieure à la première tension ;
le système comprenant au moins un moyen de stockage d'électricité (102), dit intermédiaire, à une tension intermédiaire inférieure à une tension délivrée par la caténaire (110), l'au moins un premier circuit (106), l'au moins un second circuit (104) et l'au moins un moyen de stockage d'électricité (102) étant agencés pour être alimentés par ladite caténaire (110) lorsque ledit véhicule ferroviaire est alimenté par ladite caténaire (110), et en l'absence de tension dans ladite caténaire (110), l'au moins un moyen de stockage (102) étant prévu pour alimenter l'au moins un second circuit (104); **caractérisé en ce que** ladite tension intermédiaire est supérieure ou égale à la seconde tension.

2. Système (100,200,300) selon la revendication précédente, **caractérisé en ce qu'**au moins un moyen de stockage intermédiaire (102) alimente au moins un premier circuit (106).

3. Système (100,200,300) selon la revendication précédente, **caractérisé en ce qu'**il comprend au moins un convertisseur de tension alimenté par au moins un moyen de stockage intermédiaire (102) et alimentant au moins un premier circuit (106).

4. Système (100,200,300) selon l'une quelconques des revendications 2 ou 3, **caractérisé en ce qu'**il comprend au moins un moyen de stockage (206), dit premier moyen de stockage, alimenté par au moins un moyen de stockage intermédiaire (102) et alimentant au moins un premier circuit (106) et agencé pour stocker de l'énergie électrique à la première tension.

5. Système (100,200,300) selon l'une quelconques des revendications précédentes, **caractérisé en ce que** la tension intermédiaire est égale à la seconde tension.

6. Système (100,200,300) selon l'une quelconques des revendications 1 à 4, **caractérisé en ce que** la tension intermédiaire est supérieure à la seconde tension.

7. Système (100,200,300) selon la revendication précédente, **caractérisé en ce qu'**il comprend au moins un convertisseur de tension alimenté par au moins un moyen de stockage intermédiaire (102) et alimentant au moins un second circuit (104).

8. Système (100,200) selon l'une quelconques des revendications 2 à 7, **caractérisé en ce que** chaque premier circuit (106) est alimenté par chaque moyen de stockage intermédiaire (102).

9. Système (100,300) selon l'une quelconques des revendications 2 à 7, caractérisé en ce chaque au moins un premier circuit (106) peut être alimenté par un seul et unique moyen de stockage intermédiaire (102).

10. Système (100,200,300) selon l'une quelconques des revendications précédentes, **caractérisé en ce qu'**au moins un moyen de stockage intermédiaire (102) alimente, et/ou est alimenté par, au moins un moteur électrique de traction (108) du véhicule ferroviaire.

11. Système (100,200,300) selon l'une quelconques des revendications précédentes, **caractérisé en ce qu'**au moins un second circuit (104) est ou comprend :
- un circuit de climatisation,
- un circuit de chauffage,
- un circuit de production de froid,
- un circuit de production d'air, et/ou
- un circuit de ventilation.

12. Véhicule ferroviaire comprenant un système d'alimentation (100,200,300) selon l'une quelconques des revendications précédentes.

## Patentansprüche

1. Stromversorgungssystem (100, 200, 300) für ein Schienenfahrzeug, das von einer Oberleitung (110) versorgt wird, wobei das System (100, 200, 300) umfasst:
- mindestens eine erste elektrische Schaltung (106), die mit einer ersten Spannung betrieben wird; und
- mindestens eine zweite elektrische Schaltung (104), die mit einer zweiten Spannung betrieben wird, die höher als die erste Spannung ist;
wobei das System mindestens ein als Zwischenspeichermittel bezeichnetes Mittel zur Speicherung von Elektrizität (102) bei einer Zwischenspannung umfasst, die niedriger ist als eine von der Oberleitung (110) gelieferte Spannung, wobei die mindestens eine erste Schaltung (106), die mindestens eine zweite Schaltung (104) und das mindestens eine Stromspeichermittel (102) so angeordnet sind, dass sie von der Oberleitung (110) versorgt werden, wenn das Schienenfahrzeug von der Oberleitung (110) versorgt wird, und wobei bei Fehlen einer Spannung in der Oberleitung (110) das mindestens eine Speichermittel (102) vorgesehen ist, um die mindestens eine zweite Schaltung (104) zu versorgen; **dadurch gekennzeichnet, dass** die Zwischenspannung größer oder gleich der zweiten Spannung ist.

2. System (100, 200, 300) nach dem vorhergehenden Anspruch, **dadurch gekennzeichnet, dass** mindestens ein Zwischenspeichermittel (102) mindestens eine erste Schaltung (106) versorgt.

3. System (100, 200, 300) nach dem vorhergehenden Anspruch, **dadurch gekennzeichnet, dass** es mindestens einen Spannungswandler umfasst, der von mindestens einem Zwischenspeichermittel (102) versorgt wird und mindestens eine erste Schaltung (106) versorgt.

4. System (100, 200, 300) nach einem der Ansprüche 2 oder 3, **dadurch gekennzeichnet, dass** es mindestens ein als erstes Speichermittel bezeichnetes Speichermittel (206) umfasst, das von mindestens einem Zwischenspeichermittel (102) versorgt wird und mindestens eine erste Schaltung (106) versorgt und so eingerichtet ist, dass es elektrische Energie mit der ersten Spannung speichert.

5. System (100, 200, 300) nach einem der vorhergehenden Ansprüche, **dadurch gekennzeichnet, dass** die Zwischenspannung gleich der zweiten Spannung ist.

6. System (100, 200, 300) nach einem der Ansprüche 1 bis 4, **dadurch gekennzeichnet, dass** die Zwischenspannung größer als die zweite Spannung ist.

7. System (100, 200, 300) nach dem vorhergehenden Anspruch, **dadurch gekennzeichnet, dass** es mindestens einen Spannungswandler umfasst, der von mindestens einem Zwischenspeichermittel (102) versorgt wird und mindestens eine zweite Schaltung (104) versorgt.

8. System (100, 200) nach einem der Ansprüche 2 bis 7, **dadurch gekennzeichnet, dass** jede erste Schaltung (106) von jedem Zwischenspeichermittel (102) versorgt wird.

9. System (100,300) nach einem der Ansprüche 2 bis 7, **dadurch gekennzeichnet, dass** jede mindestens eine erste Schaltung (106) von einem einzigen Zwischenspeichermittel (102) versorgt werden kann.

10. System (100, 200, 300) nach einem der vorhergehenden Ansprüche, **dadurch gekennzeichnet, dass** mindestens ein Zwischenspeichermittel (102) mindestens einen elektrischen Fahrmotor (108) des Schienenfahrzeugs versorgt und/oder von diesem versorgt wird.

11. System (100, 200, 300) nach einem der vorhergehenden Ansprüche, **dadurch gekennzeichnet, dass** mindestens eine zweite Schaltung (104) ist oder umfasst:
- eine Klimatisierungsschaltung,
- eine Heizschaltung,
- eine Kälteerzeugungsschaltung,
- eine Lufterzeugungsschaltung und/oder
- eine Belüftungsschaltung.

12. Schienenfahrzeug ein Versorgungssystem (100, 200, 300) umfassend nach einem der vorhergehenden Ansprüche.

## Claims

1. Electrical power supply system (100, 200, 300) for a rail vehicle powered by a catenary (110), said system (100, 200, 300) comprising:
- at least one first electrical circuit (106) operating at a first voltage; and
- at least one second electrical circuit (104) operating at a second voltage higher than the first voltage;
the system comprising at least one means (102) for storing electricity, referred to as an intermediate storage means, at an intermediate voltage lower than a voltage provided by the catenary (110), the at least one first circuit (106), the at least one second circuit (104) and the at least one electricity storage means (102) being arranged so as to be powered by said catenary (110) when said rail vehicle is powered by said catenary (110), and, in the absence of voltage in said catenary (110), the at least one storage means (102) being intended to power the at least one second circuit (104); **characterized in that** said intermediate voltage is greater than or equal to the second voltage.

2. System (100, 200, 300) according to the preceding claim, **characterized in that** at least one intermediate storage means (102) powers at least one first circuit (106).

3. System (100, 200, 300) according to the preceding claim, **characterized in that** it comprises at least one voltage converter powered by at least one intermediate storage means (102) and powering at least one first circuit (106).

4. System (100, 200, 300) according to either claim 2 or claim 3, **characterized in that** it comprises at least one storage means (206), referred to as a first storage means, powered by at least one intermediate storage means (102) and powering at least one first circuit (106) and arranged so as to store electrical energy at the first voltage.

5. System (100, 200, 300) according to any of the preceding claims, **characterized in that** the intermediate voltage is equal to the second voltage.

6. System (100, 200, 300) according to any of claims 1 to 4, **characterized in that** the intermediate voltage is greater than the second voltage.

7. System (100, 200, 300) according to the preceding claim, **characterized in that** it comprises at least one voltage converter powered by at least one intermediate storage means (102) and powering at least one second circuit (104).

8. System (100, 200) according to any of claims 2 to 7, **characterized in that** each first circuit (106) is powered by each intermediate storage means (102).

9. System (100, 300) according to any of claims 2 to 7, **characterized in that** each at least one first circuit (106) can be powered by a single intermediate storage means (102).

10. System (100, 200, 300) according to any of the preceding claims, **characterized in that** at least one intermediate storage means (102) powers and/or is powered by at least one electric traction motor (108) of the rail vehicle.

11. System (100, 200, 300) according to any of the preceding claims, **characterized in that** at least one second circuit (104) is or comprises:
- an air conditioning circuit,
- a heating circuit,
- a cold production circuit,
- an air production circuit, and/or
- a ventilation circuit.

12. Rail vehicle comprising a power supply system (100, 200, 300) according to any of the preceding claims.
